# EUROPEAN PATENT SPECIFICATION

(11) **EP 3 169 751 B1**
(45) Date of publication and mention of the grant of the patent: **30.10.2019**
(21) Application number: 15750916.7
(22) Date of filing: 09.07.2015
(51) Int. Cl.: C10G 1/10, C10B 49/02, C10B 53/02

(54) **METHOD OF CONTINUOUS PRODUCTION OF LIQUID AND GASEOUS FUELS FROM THE PART OF ORGANIC SUBSTANCES IN THE WASTE**
VERFAHREN ZUR KONTINUIERLICHEN HERSTELLUNG VON FLÜSSIGEN UND GASFÖRMIGEN BRENNSTOFFEN AUS DEM ANTEIL VON ORGANISCHEN STOFFEN IN ABFÄLLEN
PROCÉDÉ DE PRODUCTION CONTINUE DE COMBUSTIBLES LIQUIDES ET GAZEUX À PARTIR D'UNE PARTIE DES SUBSTANCES ORGANIQUES SE TROUVANT DANS LES DÉCHETS

(30) Priority: 15.07.2014 CZ 20140488
(43) Date of publication of application: 24.05.2017
(73) Proprietor: Alpajar Group s.r.o., 735 14 Orlová, Poruba (CZ)
(72) Inventor: VASÍCEK, Alois, 582 82 Golcuv Jeníkov (CZ)
(74) Representative: Jeck, Anton
(86) International application number: PCT/CZ2015/000074
(87) International publication number: WO 2016/008460

(56) References cited:
- EP-A1- 2 233 547
- US-A1- 2011 303 525
- US-A1- 2012 017 499
- US-A1- 2013 098 751

## Description

### Field of the invention

The invention relates to a method of continuous production of liquid and gaseous fuels from the part of organic substances in the waste, in particular in the industrial, agricultural and municipal waste, including their mixtures.

### Background of the invention

Civilization expansion heading towards the increasing share of energy use of combustion engines carries a logical consequence in the form of the finite reserves of oil, coal and natural gas. Ways of use of solid fuels are known even from the days of steam engines, and till today they are practically used in stable devices, such as thermal power stations and some of the heating plants. Today the practical use of combustion engines, however, because of its mobility given by the simplicity of the design and the low weight, occupies a monopoly position. Even in the liveliest fantasies it is not yet foreseen, that after the exhaustion of stocks of oil, i.e. of the liquid fuel, there will come a return to energy mobile systems using again solid fuels, as it was the case in the days of steam engines.

The production of liquid fuels from the available solids is not a new concept. Already during the Second World War the German industry produced gasoline from brown coal. Similarly, there are known systems of energy distribution of coal gas to households and industrial buildings. Processes known and described, however, are based on the use of thermal processing of coal, from which the hydrocarbons and carbon monoxide, which are either liquids or gases, leave during the heating. It is not about the raw materials from renewable resources; therefore, they are in the same application area as a source of petroleum-based.

Other already known procedure for obtaining the liquid fuels is use of biotechnologies, involving the use of microorganisms for the production of methane or alcohol. Biotechnologies - fermentation - use the nutrients contained in the built substance, which are the polymers of sugars - in particular D-glucose. These polysaccharides are split by enzyme or chemical way to simple sugars and then subjected to fermentation. Recently, this category can be supplemented also by the production of ethanol from grain, which was in the past the method used practically only for obtaining of food alcohol.

The above-described methods for obtaining gaseous and liquid fuels, however, are limited by the fact that each of these technologies cannot work with others than selected pure raw materials. There are not known many technologies for the use of organic parts in the waste, where are represented the substances of different chemical composition together, both organic and inorganic substances. Already known procedures can be classified practically into two groups. The first of them is the group of pyrolysis methods, in which, with the help of the high temperature, the gaseous and liquid products and also always pyrolysis residue in the form of baked polymer substance of indefinable composition, are gained. The products of pyrolysis show, in the course of their own reaction, the variable composition. This fact causes, that these products cannot be used universally, as is the case with fuels on the basis of natural gas or other of the above-described raw materials. In this group of methods we can also add the procedure which does not leave the pyrolysis rest, but which from a practical and economic point of view have not yet found a wider use. This method in a special chamber "plasmatically evaporates" the whole substance and in the form of its gas it leads the substance to burning. Plasma is created by the highly effective lasers, which makes this technology not easily available, regardless of the energy requirements of these devices that burden the price of the product with its high initial investments.

The second group of methods is formed by methods using partial oxidation, as for example the method according to the patent CZ 283812 "Method of processing of plastics from municipal waste", in which in the reducing atmosphere of the burning carbon the melt of the plastic is being decomposed. This method is independent of its own composition of input raw materials, but it must be conducted into the reaction environment in the form of a melt. This makes the method dependent on the selected waste.

These and other equivalent methods of obtaining liquid and gaseous fuels from the part of organic substances in industrial, agricultural and municipal waste are also known from other patent literature, such as the solutions according to the file of the US 2008182911, whose object is a method and apparatus for conversion of organic waste to a usable liquid fuels, which is based on the conversion of carbon dioxide in the reducing environment of hydrogen, when with the appropriate proportion the methanol preferably arises. Otherwise the various derivatives of liquid fuels arise.

From the document WO 2012/095288 is further known the method for the production of fuel gas from a raw synthesis gas, which is based on the hydrothermal carbonation of coal together with biomass or organic waste. In this process the substance is gasified by the flame, taking care that the endothermic and exothermic reaction, which are taking place in this process, are in equilibrium. The arising carbon dioxide in this case acts as a gasification agent and as the transport agent for the drainage of steams of carbonized substance. The reactions of carbon dioxide with other products of the carbonization head towards, similarly as in the previous method according to file US 2008182911, to the formation of methanol and other fuels. Even this method, - however, has not found a wider use.

From the patent file CZ 289471, applied on the basis of the priority application US 1992965104, it is further known the method of re-utilisation of waste plastics for the production of the reduction, synthesis or fuel gas, in which the powdered plastics are mixed with inorganic substances based on titanium dioxide, barium carbonate, talk, clays, alumina or aluminosilicates. The same is used in this process when instead of plastics the wastes from coal or liquid hydrocarbons are used, and these mixtures are subjected to oxidation with the formation of the reduction gas. The disadvantage of this method is, however, the output of the gas containing carbon monoxide, 'which due to its toxicity will not allow this method to be applied on such a scale that would significantly affect the ecological burden, which the waste plastics represent today.

From EP 2 233 547 A1 a process for production of hydrodocarbons from plastic in which the plastic is heated externally via the reactor wall and by friction from a conveyor. The Product is obtains as a gas and condensed outside the reactor.

US 2011/303525 A1 describes a recycling process for used tires in which the tires are burned in an atmosphere an inert gas, oxygen and hydrocarbons. The product is obtained as a gas and condensed outside the reactor.

US2013/098751 describes a method for torrefaction of lignocellulosic biomass using a torrefaction reactor vessel having stacked tray assemblies.

US2012/017499 discloses torrefaction systems and methods for producing torrefied products from biomass.

### Summary of the invention

The shortcomings of the above mentioned methods of obtaining gaseous and liquid fuels are eliminated by the method, according to claim 1, of continuous production of liquid and gaseous fuels from the part of organic substances in the waste, in particular in the industrial, agricultural and municipal waste, including their mixtures, characterised in thermic decomposition of these wastes into fuels - usable low-molecular hydrocarbons, as well as other residual inorganic or other parts intended for recycling or to any landfill, according to the present invention, whose essence consists in the fact that the treated waste with a content of organic substances, especially in the form of paper, plastics, rubber, including non-crushed used tires, wooden elements, sawdust, rests of meals and fats, and their packaging, in a hermetically sealed reaction space with non-access of air thermically decomposes by the heated gaseous inert medium, while by the influence of the electrostatic charge, naturally resulting from the decomposition of organic, in particular polymeric substances, pass from them decomposed low-molecular substances in the form of hydrocarbons altogether in the mixture with gaseous inert medium as the carrier gas in the aerosol. The resulting aerosol is then further conducted to its cooling, precipitation and the mutual separation in it contained gaseous, and liquid low-molecular hydrocarbons, whereupon, after the decomposition of all of the parts of organic substances from the hermetically closed reaction space, all the residual inorganic or other parts of the processed waste are gradually being removed the waste containing organic substances is thermically decomposed in five successive technological stages, where in the first stage a gaseous inert medium for the reaction on the input temperature of 300 to 900°C is created, which in the second stage flows in the reaction space against the direction of process in which the waste is being processed, whereupon in the third stage, the resulting aerosol is cooled to a temperature below 20°C, from which in the fourth stage the liquid part of the low-molecular hydrocarbons is separated from the gas ones, which then progress along with the gaseous inert medium into the fifth stage, where they are cooled below the temperature of - 40°C or preferably are liquefied by compression at pressures of 0.5 to 4 MPa, wherein the inert gaseous medium contains in volume quantity of 50 to 85 % of nitrogen, 3 to 25 % of carbon dioxide and 1 to 5 % of carbon monoxide, when the rest is created by a superheated water steam.

The principle of the invention consists further in the fact that the flow of the gaseous inert medium through hermetically sealed reaction space and its subsequent dissipation, together with the distributed low-molecular substances, is with advantage carried out by decreasing of the pressure at the exit from this reaction space, where by a controlled decrease of its temperature gradient towards the exit of the reaction space a narrower distribution curve of the chemical composition of the arising low-molecular hydrocarbons is provided. Reduction of the pressure at the outlet of the reaction space is also carried out to the value of the negative pressure of 0,01 to 0,03 MPa, thereby the optimum rate of flow of gaseous inert medium in the reaction space in the range of 0,001 to 0,02 m/s and a temperature gradient of 100 to 350 K/m are achieved.

The principle of the invention consists further in the fact that the inert gaseous medium contains in volume quantity of 50 to 85 % of nitrogen, 13 to 25 % of carbon dioxide and 1 to 5 % of carbon monoxide, when the rest is created by a superheated water steam. The consumed quantity of the gaseous inert medium then, in an optimal implementation of the invention, varies in the amount of 0.2 to 3 m³/kg of processed waste, while it acts on the processed waste for a period from 10 to 80 seconds.

In the method according to the invention, the waste containing organic substances thermically decomposes in five successive technological stages, where in the first stage a gaseous inert medium for the reaction on the input temperature of 300 to 900 °C is created, which in the second stage flows in the reaction space against the direction of process in which the waste is being processed. Thus it is in this second stage, to ensure that the treated waste is thermically decomposed in a speed, which is proportional to the temperature gradient, which means that the already partially more and more decomposed processed waste is in its progress in the reaction space still heated to a higher temperature, and thereby there is guaranteed a higher conversion of its decomposition, and the narrower distribution curve of the composition of its output products. In the third stage, the resulting aerosol is cooled to a temperature below 20 °C, whereupon in the fourth stage from aerosol the liquid part of the low-molecular hydrocarbons is separated from the gas ones, which then progress along with the gaseous inert medium into the fifth stage, where they are cooled below the temperature of - 40 ° C or preferably are liquefied by compression at pressures of 0.5 to 4 MPa.

The reaction space is at such a practical implementation of the method according to the invention created in a vertical or horizontal reactor equipped, at the input of processed waste, with the filling chamber and system of hermetic closures, which are also arranged at the outlet of this reactor intended for the removal of residual inorganic or other parts of the processed waste. Developing of a gaseous inert medium is performed in a specially modified part of the reactor in the vicinity of its outlet, where also the oxidation of the last residues of organic parts, which were not decomposed by the previous process, takes place.

The aerosol generated in the reaction space is moved for cooling into the system of coolers with air and hydraulic outlets of heat and subsequent condensation of the products of the aerosol is done either by the passage of the high voltage field about the potential of 10 to 45 kV or preferably in a rotary centrifugal separator, where individual charges of particles of the degradation products are discharged by contact with mechanical parts of the separator and already in the form of liquid are moved by the pipeline into storage tanks.

Benefit of the solution according to the present invention is against all previous similar methods of production of gaseous and liquid fuels from the part of organic substances in the waste, in particular the fact that in this process it is guaranteed a perfect heat transfer to the treated waste and at the same time, it is guaranteed a perfect drainage of all reaction products from the reaction space, and even during its course. Therefore the accumulation of particular intermediates in this space does not take place; this accumulation would otherwise prevent from the overall decomposition of the processed waste, which is a typical a problem of all similar known technologies.

### Examples of embodiment of the invention

### Example 1:

In the first an exemplary implementation of the method according to the invention a hermetically sealed vertically built reactor with a square base of side 1 meter and a height of 4.5 metres was used, in which the lower part contained the generator of gaseous inert medium with a device for the outlet of inorganic parts and the upper, filling part, is formed by hermetical chamber with two closures, whose volume amounted to 1 cubic meter. The middle part of the reactor was equipped in the upper part with the outlet opening for the outlet of the reaction products, which was connected to a separator of solid particles, condenser and extractor separator of particles - microdroplets of hydrocarbons from the aerosol. The separator was connected to the collector of liquid parts, and the output of the media went through the condenser at a temperature of the cooling - 15 °C. The output from this condenser was taken out by pipe outside the workplace and was equipped with a burner for incineration of the rest.

The reaction space or the hermetic chamber of the reactor was filled with 150 kg of mixed waste that consisted of the particles to a size of 30 mm, containing in the mass quantity of 32 % of paper, 14 % of sawdust, 27 % of PET bottles, 11 % of PS cups and 16 % of unidentified waste in the form of the remnants of meals and packaging from them. After starting the reaction, in which the inlet temperature of the gaseous inert media amounted to 670 ° C, the vacuum pressure amounted to 0.03 MPa, and the temperature of the aerosol at the outlet of the reactor amounted to 178 ° C, the consumed waste was from the top replenished through the chamber of the filling device and by the action of gravity it fall to the bottom of the reactor. The speed of flow of the gaseous inert medium in the reaction space was 0,011 m/s and a temperature gradient was 145 K/m. The gaseous inert medium, in this specific example of implementation, contained in the volume the amount of 62 % of the nitrogen, 14,5% of carbon dioxide and 1 % of carbon monoxide, while the rest was formed with the superheated water steam. The amount of consumed gas of inert media was at 1.2 m³/kg of processed waste, while it operated on the treated waste for a period of 45 seconds.

In this an exemplary implementation the reactor was in operation for a period of 4 hours, while there has been processed 1250 kg of waste in it. Products in this case consisted of 726 kg of liquid products on the calorific value of 36.4 MJ/kg, 130 kg of liquefied gas with a calorific value of 37,1 MJ/kg and 75 kg of inorganic waste.

The obtained liquid products after the separation of the aerosol were subjected to an analysis of the representation of the individual fractions according to the boiling point. Method SOP 20/01 with an accuracy of ± 5 % determined that up to 100 °C it redistills 2 % of vol., up to 200 ° C it redistills 15 % of vol., up to 250 °C it redistills 41 % of vol. and up to 300 °C it redistills 81 % of vol. The remaining 19 % of vol. was the distillation residue.

### Example 2:

In the second an exemplary implementation of the method according to the invention there was on the device described in example 1 processed 1426 kg of used tires. Uncrushed tires were gradually filled into the reactor through the filling chamber and an inorganic part, mainly consisting of steel wires, was extracted through a device outlet of this material. The temperature of the gaseous inert medium on entering the reaction amounted to 620 ° C, in the output 220 ° C, while the vacuum pressure was of 0.025 MPa.

The speed of flow of the gaseous inert medium in the reaction space here was 0.015 m/s and a temperature gradient amounted to 136 K/m. The gaseous inert medium, in this specific example of implementation, contained in the volume the amount of 64 % of the nitrogen, 13.5% of carbon dioxide and 0.1% of carbon monoxide, with the remainder formed the superheated water steam. The amount of consumed gas of inert media was at 0.7 m³/kg of processed waste, while it operated on the treated waste for a period of 75 seconds.

Of the total quantity of the processed tires it was obtained 626 litres of liquid fuels with a calorific value of 34.3 MJ/kg 170 kg of liquefied gas, 173 kg of iron and 137 kg of ash.

The obtained liquid products after the separation from the aerosol were subjected to an analysis of the representation of the individual fractions according to the boiling point. Method SOP 20/01 with an accuracy of ± 5 % determined that up to 100 °C it redistills 12 % of vol., up to 200 ° C it redistills 35 % of vol., up to 250 °C it redistills 75 % of vol. and up to 300 °C it redistills 93 % of vol. The remaining 7 % of vol. was the distillation residue.

### Industrial applicability

Method of continuous production of liquid and gaseous fuels according to the invention can be widely used to effective waste treatment and to their at least partial evaluation to the products, suitable for the drive of the thermal machines and heat production.

## Claims

1. The method of continuous production of liquid and gaseous fuels from the part of organic substances in the waste, in particular in the industrial, agricultural and municipal waste, including their mixtures, **characterised in** thermic decomposition of these wastes into fuels - usable low-molecular hydrocarbons, as well as other residual inorganic or other parts intended for recycling or to any landfill, **characterised in that**
the treated waste with a content of organic substances, especially in the form of paper, plastics, rubber, including non- crushed used tires, wooden elements, sawdust, rests of meals and fats, and their packaging, in a hermetically sealed reaction space with non-access of air thermically decomposes by the heated gaseous inert medium, while by the influence of the electrostatic charge, naturally resulting from the decomposition of organic, in particular polymeric substances, pass from them decomposed low- molecular substances in the form of hydrocarbons altogether in the mixture with gaseous inert medium as the carrier gas in the aerosol which is then further conducted to its cooling, precipitation and the mutual separation in it contained gaseous, and liquid low-molecular hydrocarbons, whereupon, after the decomposition of all of the parts of organic substances from the hermetically closed reaction space, all the residual inorganic or other parts of the processed waste are gradually being removed the waste containing organic substances is thermically decomposed in five successive technological stages, where in the first stage a gaseous inert medium for the reaction on the input temperature of 300 to 900°C is created, which in the second stage flows in the reaction space against the direction of process in which the waste is being processed, whereupon in the third stage, the resulting aerosol is cooled to a temperature below 20°C, from which in the fourth stage the liquid part of the low-molecular hydrocarbons is separated from the gas ones, which then progress along with the gaseous inert medium into the fifth stage, where they are cooled below the temperature of - 40°C or preferably are liquefied by compression at pressures of 0.5 to 4 MPa, wherein the inert gaseous medium contains in volume quantity of 50 to 85 % of nitrogen, 3 to 25 % of carbon dioxide and 1 to 5 % of carbon monoxide, when the rest is created by a superheated water steam.

2. The method of continuous production of liquid and gaseous fuels according to the claim 1 , **characterised in that** the flow of the gaseous inert medium through hermetically sealed reaction space and its subsequent dissipation, together with the distributed low-molecular substances, is with advantage carried out by decreasing of the pressure at the exit from this reaction space, where by a controlled decrease of its temperature gradient towards the exit of the reaction space a narrower distribution curve of the chemical composition of the arising low-molecular hydrocarbons is provided.

3. The method of continuous production of liquid and gaseous fuels according to the claim 2, **characterised in that** by reduction of the pressure at the outlet of the reaction space to the value of the negative pressure of 0,01 to 0,03 Pa, the optimum rate of flow of gaseous inert medium in the reaction space in the range of 0,001 to 0,02 m/s and a temperature gradient of 100 to 350 K/m are achieved.

4. The method of continuous production of liquid and gaseous fuels according to the claims 1, 2, 3 **characterised in that** the quantity of the consumed gaseous inert medium varies in the amount of 0.2 to 3 m³/kg of processed waste, while it acts on the processed waste for a period from 10 to 80 seconds.

## Patentansprüche

1. Verfahren zur fortlaufenden Erzeugung flüssiger und gasförmiger Brennstoffe aus dem Teil der organischen Substanzen im Abfall, insbesondere im Industrie-, Landwirtschafts- und Gemeindeabfall einschließlich ihrer Mischungen, wobei durch thermische Zersetzung dieser Abfallstoffe in Brennstoffe verwendbare, niedermolekulare Kohlenwasserstoffe und auch andere restliche anorganische Stoffe oder andere Teile entstehen, die für die Wiederverwendung oder für irgendeine Deponie vorgesehen sind,
**dadurch gekennzeichnet,**
**dass** der behandelte Abfall mit einem Gehalt an organischen Substanzen, insbesondere in Form von Papier, Plastik, Gummi einschließlich nicht zerkleinerter Reifen, Holzelemente, Sägemehl, Resten von Mahlzeiten und Fetten sowie deren Verpackungen, in einem hermetisch abgeschlossenen Reaktionsraum unter Luftabschluss thermisch durch die Wärme des gasförmigen inerten Mediums zersetzt wird, während durch den Einfluss einer elektrostatischen Ladung, die sich in natürlicher Weise aus der Zersetzung der organischen Substanzen ergibt, insbesondere polymerer Substanzen, die von diesen abgeleiteten zersetzten, niederrmolekularen Substanzen in der Form von Kohlenwasserstoffen insgesamt in der Mischung mit einem gasförmigen inerten als Trägergas arbeitenden Aerosol führen, das dann zu seiner Kühlung, Ausfällung und gegenseitigen Trennung der in ihr enthaltenen gasförmigen und flüssigen niedermolekularen Kohlenwasserstoffe weitergeleitet wird, und dass darauf nach der Zersetzung aller Teile der organischen Substanzen aus dem hermetisch abgeschlossenen Raum alle restlichen anorganischen Stoffe oder andere Teile des verarbeiteten Abfalls allmählich entfernt werden, und
**dass** der die organischen Sugstanzen enthaltende Abfall in fünf aufeinanderfolgenden technologischen Stufen thermisch zersetzt wird, wobei in der ersten Stufe ein gasförmiges inertes Medium für die Reaktion bei einer Eingangstemperatur von 300-900°C erzeugt wird, das Medium in der zweiten Stufe in den Reaktionsraum entgegen der Richtung des Prozesses fließt, in der der Abfall verarbeitet wird, wobei ferner in der dritten Stufe das sich ergebende Aerosol auf eine Temperatur von unter 20°C gekühlt wird, in der vierten Stufe der flüssige Teilder niedermolekularen Kohlenwasserstoffe von den gasförmigen Stoffen getrennt wird, die dann mit dem gasförmigen inerten Medium in die fünfte Stufe vorwärtsgehen, in der sie auf eine Temperatur von unter -40°C gekühlt oder vorzugsweise bei einem Druck von 0,5-4Mpa verflüssigt werden, wobei das gasförmige inerte Medium eine volumenmenge von 50-85% Stickstoff, 3-25% Kohlendioxid und1-5% Kohlenmonoxid enthält, wenn der Rest durch einen superheißen Wasserdampf erzeugt wird.

2. Verfahren zur fortlaufenden Erzeugung flüssiger und gasförmiger Brennstoffe nach Anspruch 1,
**dadurch gekennzeichnet,**
**dass** der Fluss des gasförmigen inerten Mediums durch den hermetisch abgeschlossenen Reaktionsraum und die darauf erfolgende Übertragung des Mediums zusammen mit den verteilten, niedermolekularen Substanzen in vorteilhafter Weise durch eine Druckverminderung am Ausgang des Reaktionsraums durchgeführt wird, wobei durch eine gesteuerte Abnahme des Temperaturgradienten zum Ausgang des Reaktionsraums eine engere Verteilungskurve der chemischen Zusammensetzung der auftretenden niedermolekularen Kohlenwasserstoffe vorgesehen wird.

3. Verfahren zur fortlaufenden Erzeugung flüssiger und gasförmiger Brennstoffe nach Anspruch 2,
**dadurch gekennzeichnet,**
**dass** durch Verminderung des Drucks am Ausgang des Reaktionsraums auf einen Wert eines negativen Drucks von 0,01-0,03Pa die Optimalrate des Flusses des gasförmigen inerten Mediums im Reaktionsraum im Bereich von 0.001-0,02m/s und ein Temperaturgradient von 100-350K/m erreicht wird.

4. Verfahren zur fortlaufenden Erzeugung flüssiger und gasförmiger Brennstoffe nach den Ansprüchen 1-3,
**dadurch gekennzeichnet,**
**dass** die Menge des verbrauchten gasförmigen inerten Mediums sich mit einem Betrag von 0,2-3m³/kg des verarbeiteten Abfalls ändert, während es auf den verarbeiteten Abfall für eine Dauer von 10-80s einwirkt.

## Revendications

1. Procédé pour la production en continu de combustibles liquides et gazeux de partie de substances organiques contenues dans les déchets, en particulier les déchets industriels, agricoles et municipaux y inclus leurs mélanges où par dégradation thermique de ces déchets en combustibles des hydrocarbures utilisables sous-moléculaires et aussi d'autres matières résiduelles anorganiques et le cas échéant d'autres pièces naissent prévus pour la réutilisation ou pour d'autres mises en décharge
Est caractérisé de sorte que
Les déchets traités avec un contenu de substances organiques en particulier sous forme de papier, plastique, caoutchouc y inclus des pneus non broyés, des éléments en bois, sciure, restes de repas et gras ainsi que leurs emballages, sont détruits dans une chambre de réaction hermétiquement fermée à l'abri de l'air à titre thermique grâce à la chaleur du support gazeux inerte, tandis que par l'influence d'une charge électrostatique résultant à titre naturel de la destruction des substances organiques en particulier des substances polymères conduites de ces substances dérivées détruites sous-moléculaires sous la forme d'hydrocarbures au total dans le mélange avec un aérosol gazeux inerte servant de gaz vecteur transféré ensuite pour son refroidissement, précipitation et séparation mutuelle des hydrocarbures y contenus gazeux liquides et sous-moléculaires et qu'après la destruction de toutes les pièces des substances organiques de la chambre hermétiquement fermée toutes les matières résiduelles anorganiques ou les autres pièces des déchets transformés sont éloignées à titre progressif et que les déchets contenant les substances organiques sont détruits à titre thermique dans cinq étapes technologiques successives où lors de la première étape un support gazeux inerte est produit dans une réaction de température d'entrée de 300-900°C, le support dans la deuxième étape coule dans la chambre de réaction contre la direction du processus où les déchets sont transformés où par ailleurs dans la troisième étape l'aérosol en résultant est refroidi à une température de moins de 20°C, dans la quatrième étape la partie liquide des hydrocarbures sous-moléculaires est séparée des matières gazeuses qui avancent avec le support gazeux inerte vers la cinquième étape où elles sont refroidies à une température sous -40°C ou à titre préférentiel liquéfiées sous une pression de 0,5-4Mpa où le support gazeux inerte contient une quantité volumineuse de 50-85% d'azote, 3-25% de dioxyde de carbone et 1-5% de monoxyde de carbone si le reste est produit par le biais d'une vapeur d'eau ultra-chaude.

2. Procédé pour la production en continu de combustibles liquides et gazeux selon la revendication 1,
Est caractérisé de sorte que
Le fleuve du support gazeux inerte s'introduit par la chambre de réaction hermétiquement fermée et que le transfert s'ensuivant du support en même temps que les substances distribuées sous-moléculaires de manière avantageuse se fait par un relâchement de pression à la sortie de la chambre de réaction où par une réduction pilotée des gradients de la température à la sortie de la chambre de réaction une courbe de distribution étroite de la composition chimique des hydrocarbures rencontrés sous-moléculaires est prévue.

3. Procédé pour la production en continu de combustibles liquides et gazeux selon la revendication 2,
Est caractérisé de sorte que
Par relâchement de la pression à la sortie de la chambre de réaction à une valeur de pression négative de 0,01-0,03Pa la vitesse optimale du fleuve du support gazeux inerte dans la chambre de réaction est atteinte dans la plage de 0.001-0,02m/s et à un gradient de température de 100-350K/m.

4. Procédé pour la production en continu de combustibles liquides et gazeux selon les revendications 1-3,
Est caractérisé de sorte que
La quantité du support gazeux inerte utilisé se modifie avec la quantité de 0,2-3m³/kg des déchets transformés tandis qu'il agit sur les déchets transformés pour une durée de 10-80s.
